# FASCICULE DE BREVET EUROPEEN

(11) **EP 4 335 708 B1**
(45) Date de publication et mention de la délivrance du brevet: **22.04.2026**
(21) Numéro de dépôt: 23195711.9
(22) Date de dépôt: 06.09.2023
(51) Int. Cl.: B60T 13/36, B60T 13/66, B60T 13/68, B60T 15/02, B60T 17/22, B60T 7/12, B60T 8/18

(54) **DISPOSITIF ÉLECTRONIQUE DE RÉGULATION DE PRESSION FOURNIE À UN ÉTRIER DE FREIN FERROVIAIRE**
ELEKTRONISCHE VORRICHTUNG ZUR REGELUNG DES DRUCKES, DER AN EINEM SCHIENENBREMSSATTEL BEREITGESTELLT WIRD
ELECTRONIC DEVICE FOR CONTROLLING PRESSURE SUPPLIED TO A RAILWAY BRAKE CALIPER

(30) Priorité: 06.09.2022 FR 2208885
(43) Date de publication de la demande: 13.03.2024
(73) Titulaire: ALSTOM Holdings, 93400 Saint-Ouen-sur-Seine (FR)
(72) Inventeur: DANDOY, Alexandre, 78600 MESNIL-LE-ROI (FR); BONIN, Eric, 38200 JARDIN (FR); LATHUILIERE, Bernard, 69250 MONTANAY (FR)
(74) Mandataire: Plasseraud IP

(56) Documents cités:
- EP-A1- 3 851 357
- EP-A2- 4 035 959
- US-A- 5 735 579

## Description

La présente invention concerne un dispositif électronique de régulation de la pression fournie, à un étrier de frein à cylindre pneumatique d'un matériel roulant ferroviaire, via une paire d'électrovalves comprenant une électrovalve supérieure d'augmentation et une électrovalve inférieure de relâchement de pression.

Par matériel roulant ferroviaire, on entend un ensemble de véhicules ferroviaires propres à se déplacer sur une voie ferroviaire. Par véhicule ferroviaire, on entend une voiture motorisée ou non, une locomotive ou un ensemble formé de locomotives et voitures, ou encore un ensemble composé de voitures, la motorisation du véhicule étant répartie le long desdites voitures. Le véhicule ferroviaire est destiné à circuler sur des rails et comporte classiquement des roues en contact avec ces rails.

L'invention concerne également un système de régulation de la pression fournie à un étrier de frein à cylindre pneumatique d'un matériel roulant ferroviaire, via une paire d'électrovalves comprenant une électrovalve supérieure d'augmentation et une électrovalve inférieure de relâchement de pression, le système comprenant le dispositif électronique précité.

L'invention concerne également un matériel roulant ferroviaire comprenant ledit système de régulation.

La plupart des matériels roulants ferroviaires, à l'exception de certains véhicules légers sur rail, utilisent un système de freinage ferroviaire où l'énergie pneumatique est utilisée pour actionner le frein.

Classiquement, un tel système de freinage est principalement composé de deux éléments, à savoir d'une part une commande de frein, qui génère une pression proportionnelle à l'effort de freinage souhaité, et d'autre part un étrier de frein avec un cylindre pneumatique, qui utilise cette pression pour presser les plaquettes sur le disque de frein ou la bande de roulement sur la roue.

Au cours des dernières décennies, la commande pneumatique vise à être miniaturisée et progressivement une commande électrique pour les fonctions non sécuritaires a été introduite, comme la fonction de frein de service, tandis que la commande du frein d'urgence, qui est une commande de sécurité, reste encore actuellement principalement pneumatique.

Par système de freinage ferroviaire de type électropneumatique direct, tel que développé au cours des dernières décennies, on entend un système de freinage à commande électrique où l'ordre de commande du freinage de service (i.e. en mode opérationnel nominal), voire l'ordre de commande du freinage d'urgence (i.e. en mode opérationnel d'urgence) sont des ordres électriques envoyés par un réseau informatique de bord et/ou par des lignes électriques suivant une action sur une commande manuelle dédiée à l'activation d'un freinage de service ou d'urgence par le conducteur du véhicule ferroviaire, ou encore par un système de pilotage automatique.

Par « freinage de service » on entend le freinage mis en œuvre au sein du véhicule ferroviaire pour, en mode opérationnel nominal, réguler sa vitesse tout au long de son trajet (i.e. freiner plus ou moins fortement), ainsi que pour s'arrêter en station.

Par « freinage d'urgence » on entend le freinage mis en œuvre pour arrêter le véhicule ferroviaire en cas de situation potentiellement dangereuse pour le véhicule ferroviaire, avec un niveau de performance et de sécurité spécifiés.

L'état de l'art comprend notamment les documents EP-A1-3 851 357, US-A-5 735 579 et EP-A2-4 035 959.

Les commandes pneumatiques miniaturisées de frein dites "compactes", sont actuellement des solutions généralement propriétaires, non reconfigurables sans passer par un développement propriétaire complexe parfois incompatible pour différents matériels roulants ferroviaires, et restent insatisfaisantes en termes de compacité.

Ainsi, l'invention a notamment pour but de s'affranchir des solutions existantes tout en compactant davantage la commande de frein afin d'en réduire le coût et le poids.

A cet effet, l'invention a pour objet un dispositif électronique de régulation de la pression fournie, à un étrier de frein à cylindre pneumatique d'un matériel roulant ferroviaire, via une paire d'électrovalves comprenant une électrovalve supérieure d'augmentation et une électrovalve inférieure de relâchement de pression, ledit dispositif électronique comprenant un régulateur électronique de pression configuré pour :
- contrôler ladite paire d'électrovalves via au moins une commande électronique en comparant en permanence un premier signal électrique représentatif de la pression mesurée au sein dudit étrier à un deuxième signal électrique représentatif d'une pression de référence, et
- commander l'ouverture de :
   - l'électrovalve supérieure d'admission lorsque la valeur du premier signal électrique est inférieure à celle du deuxième signal électrique, ou
   - l'électrovalve inférieure d'échappement lorsque la valeur du premier signal électrique est supérieure à celle deuxième signal électrique ;
en présence d'une requête de freinage d'urgence, ledit deuxième signal électrique représentatif d'une pression de référence correspondant à un signal électrique représentatif de la valeur de pression nécessaire au freinage d'urgence dudit matériel roulant ferroviaire, en absence d'une requête de freinage d'urgence, ledit deuxième signal électrique représentatif d'une pression de référence correspondant à un signal électrique obtenu à partir d'au moins une entrée de freinage de service dudit dispositif fournie(s) par au moins une unité électronique de commande externe audit dispositif électronique et/ou fournie(s) par un système de contrôle et de surveillance de train.

L'architecture du dispositif électronique proposé selon la présente invention permet de remplacer la plupart des composants pneumatiques du contrôle de frein par des composants électroniques de substitution, y compris pour la fonction sécuritaire de commande du freinage d'urgence. En effet, la présente invention tire profit de la forte similitude entre l'électricité et le pneumatique en considérant que la tension est équivalente à la pression, et que le courant électrique est équivalent au débit d'air, si bien que selon la présente invention tout composant pneumatique a un équivalent électrique.

Plus précisément, la présente invention consiste à remplacer les éléments pneumatiques habituels par des éléments électriques ou numériques équivalents mis en œuvre au sein dudit dispositif selon la présente invention, pour avantageusement contrôler une unique paire d'électrovannes pneumatiques, l'une pour augmenter la pression dans le cylindre de frein, l'autre pour la diminuer.

Suivant d'autres aspects avantageux de l'invention, le dispositif électronique de régulation de la pression fournie, à un étrier de frein à cylindre pneumatique d'un matériel roulant ferroviaire, via une paire d'électrovalves comprenant une électrovalve supérieure d'augmentation et une électrovalve inférieure de relâchement de pression, comprend les caractéristiques suivantes :
Suivant un aspect avantageux, le dispositif électronique comprend en outre :
- un premier module d'acquisition configuré pour :
   - recevoir ledit premier signal électrique représentatif de ladite pression mesurée, ledit premier signal électrique étant fourni par un premier transducteur de pression externe audit dispositif électronique, ledit premier transducteur de pression étant propre à transformer la pression mesurée, au sein dudit étrier, en ledit premier signal électrique, et
   - fournir ledit premier signal électrique en entrée dudit régulateur électronique,
- un espace mémoire reconfigurable configuré pour :
   - stocker ledit signal électrique représentatif de la valeur de pression nécessaire au freinage d'urgence dudit matériel roulant ferroviaire,
   - fournir ledit signal électrique représentatif de la valeur de pression nécessaire au freinage d'urgence en entrée dudit régulateur électronique, en présence d'une requête de freinage d'urgence
- au moins un deuxième module d'acquisition configuré pour :
   - recevoir et/ou générer ledit signal électrique obtenu à partir d'au moins une entrée de freinage de service dudit dispositif fournie(s) par au moins une unité électronique de commande externe audit dispositif électronique et/ou fournie(s) par un système de contrôle et de surveillance de train, et
   - fournir ledit signal électrique obtenu en entrée dudit régulateur électronique, en absence d'une requête de freinage d'urgence.

Suivant un aspect avantageux, le dispositif comprend en outre :
- un troisième module d'acquisition configuré pour :
   - recevoir un troisième signal électrique représentatif de la pression mesurée au sein d'une suspension associée audit étrier de frein, ledit troisième signal électrique étant fourni par un deuxième transducteur de pression externe audit dispositif électronique, ledit deuxième transducteur de pression étant propre à transformer la pression mesurée, au sein de ladite suspension, en ledit troisième signal électrique, et
   - fournir ledit troisième signal électrique en entrée d'au moins un module de compensation de charge,
- au moins un module de compensation de charge configuré pour déterminer la valeur de pression nécessaire à un freinage d'urgence, ou nécessaire à un freinage d'immobilisation dudit matériel roulant ferroviaire en fonction de la charge dudit matériel roulant ferroviaire dont le troisième signal électrique est représentatif.

Suivant un aspect avantageux, ledit premier transducteur de pression et/ou ledit deuxième transducteur de pression sont directement intégrés audit dispositif électronique en utilisant un tube pneumatique connecté directement entre ledit dispositif et respectivement ledit étrier et/ou ladite suspension.

Suivant un aspect avantageux, le dispositif comprend en outre un module de régulation forcée, configuré pour acquérir au moins deux types d'ordres distincts de :
- forcer l'électrovalve d'admission à l'état fermé, ou
- forcer l'électrovalve d'échappement à l'état ouvert,
lesdits au moins deux ordres étant émis par une unité électronique de contrôle de frein externe audit dispositif électronique, ladite unité électronique de contrôle de frein étant propre à détecter un glissement des roues dudit matériel roulant, et à contrôler ledit glissement au moyen desdits ordres de forçages des électrovalves, ledit module de régulation forcée étant en outre configuré pour transformer ledit ordre acquis en une commande de régulation forcée prioritaire par rapport à la commande électronique fournie en sortie par le régulateur électronique de pression et à destination de ladite paire d'électrovalves.

Suivant un aspect avantageux, le dispositif comprend en outre un module à hystérésis configuré pour :
- comparer la valeur du premier signal électrique à un seuil prédéterminé représentatif d'une limite avant surpression au sein dudit étrier, et
- en cas de dépassement dudit seuil, générer un ordre de relâchement de pression, prioritaire sur la commande de régulation forcée, et à destination de ladite paire d'électrovalves.

Suivant un aspect avantageux, le dispositif comprend en outre un quatrième module d'acquisition configuré pour :
- recevoir un signal représentatif de l'absence de pression dans un cylindre indirect lorsque l'étrier de frein est un étrier de frein de stationnement comprenant deux cylindres de frein : un cylindre direct dédié au freinage hors stationnement et un cylindre indirect dédié au freinage de stationnement du matériel roulant ferroviaire ;
- générer un ordre de relâchement de pression, prioritaire sur la commande de régulation forcée, et à destination de ladite paire d'électrovalves.

Suivant un aspect avantageux, la commande électronique émise par défaut à destination de ladite paire d'électrovalves est une commande d'admission de pression, lorsque l'étrier de frein comprend un cylindre direct dédié au freinage de service et au freinage d'urgence, ou une commande de relâchement de pression, lorsque l'étrier de frein est un étrier de frein de stationnement comprenant uniquement un cylindre indirect dédié à la fois au freinage de service, au freinage d'urgence et/ou au frein de parking.

Suivant un aspect avantageux, le dispositif comprend en outre un module de minuterie configuré pour établir une durée minimale de transition entre deux états distincts de la paire d'électrovalves, lesdits deux états distincts étant associés à l'application de deux commandes électroniques distinctes.

Suivant un aspect avantageux, le dispositif comprend en outre un module d'autotest configuré pour lancer automatiquement un autotest dudit dispositif, et/ou un autotest de la paire d'électrovalves, et/ou dudit étrier de frein.

Suivant un aspect avantageux, le dispositif comprend en outre un module de surveillance de défaut configuré pour au moins surveiller la propre alimentation interne en puissance dudit dispositif.

Suivant un aspect avantageux, le dispositif comprend en outre
- un accéléromètre configuré pour mesurer l'accélération longitudinale dudit matériel roulant ferroviaire,
- un module de combinaison configuré pour combiner ladite accélération longitudinale à une vitesse dudit matériel roulant ferroviaire fournie par une unité électronique de contrôle de frein externe audit dispositif électronique et générer une vitesse consolidée propre à être utilisée au moins par ledit module de compensation de charge.

L'invention a aussi pour objet un système de régulation de la pression fournie à un étrier de frein à cylindre pneumatique d'un matériel roulant ferroviaire, via une paire d'électrovalves comprenant une électrovalve supérieure d'augmentation et une électrovalve inférieure de relâchement de pression, le système comprenant au moins :
- un dispositif électronique tel que décrit précédemment ;
- ladite paire d'électrovalves.

Suivant un aspect avantageux, le système comprend en outre une valve relais présentant un taux de régulation 1 :1, ladite valve relais étant localisée entre la paire d'électrovalves et l'étrier de frein à cylindre pneumatique, la paire d'électrovalves étant configurée pour générer une pression pilote à destination de ladite valve relais elle-même configurée pour amplifier ensuite le débit en sortie, selon une amplification prédéterminée, à destination de l'étrier de frein à cylindre pneumatique.

L'invention a aussi pour objet un matériel roulant ferroviaire comprenant ledit système de régulation précité.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un dispositif électronique de régulation de la pression fournie, à un étrier de frein à cylindre pneumatique d'un matériel roulant ferroviaire selon un mode de réalisation simplifié de la présente invention,
[Fig 2] la figure 2 est une représentation schématique d'un dispositif électronique de régulation de la pression selon différentes variantes de la présente l'invention.

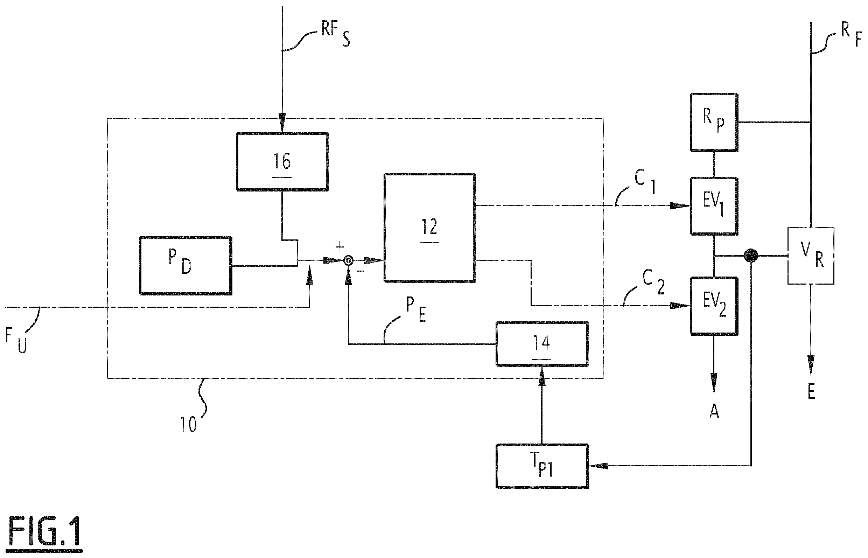

La figure 1 est une représentation schématique d'un système de régulation de la pression fournie à un étrier E de frein à cylindre pneumatique d'un matériel roulant ferroviaire, via une paire d'électrovalves (i.e. électrovannes) comprenant une électrovalve d'admission EV₁ supérieure d'augmentation de pression et une électrovalve d'échappement, inférieure, EV₂ de relâchement de pression selon un mode de réalisation simplifié.

Plus précisément, selon la présente invention un tel système de régulation de la pression comprend un dispositif électronique 10 de régulation de la pression fournie à l'étrier E de frein à cylindre pneumatique, ledit dispositif électronique 10 comprenant un régulateur électronique de pression 12.

Un tel régulateur électronique de pression 12 est configuré pour contrôler ladite paire d'électrovalves EV₁ et EV₂ via au moins une commande électronique en comparant en permanence un premier signal électrique P_{E} représentatif de ladite pression au sein dudit étrier E à un deuxième signal électrique représentatif d'une pression de référence. Il est à noter que le premier signal électrique P_{E} représentatif de ladite pression au sein dudit étrier E est obtenue par mesure directement en sortie du système de régulation 12 de pression après la paire d'électrovalves EV₁ et EV₂ tel que représenté sur la figure 1 (le tout étant raccordé par de la tuyauterie).

De plus, régulateur électronique de pression 12 est configuré pour commander, via la commande C₁, l'ouverture de l'électrovalve supérieure EV₁ lorsque la valeur du premier signal électrique est inférieure à celle du deuxième signal électrique, ou, via la commande C₂, l'électrovalve inférieure EV₂ lorsque la valeur du premier signal électrique est supérieure à celle deuxième signal électrique, et cela en considérant qu'en présence d'une requête F_{U} de freinage d'urgence, ledit deuxième signal électrique représentatif d'une pression de référence correspondant à un signal électrique représentatif de la valeur de pression nécessaire au freinage d'urgence dudit matériel roulant ferroviaire, et qu'en l'absence d'une requête F_{U} de freinage d'urgence, ledit deuxième signal électrique représentatif d'une pression de référence correspondant à un signal électrique (i.e. analogique ou numérique) RFs obtenu à partir d'au moins une entrée de freinage de service dudit dispositif 10 fournie(s) par au moins une unité électronique de commande externe audit dispositif électronique 10 et/ou fournie(s) par un système de contrôle et de surveillance de train TCMS (de l'anglais *Train Control and Monitoring System).*

Selon un exemple d'architecture illustré par la figure 1, le dispositif électronique 10 de régulation comprend notamment également un premier module électronique d'acquisition 14. Le premier module électronique d'acquisition 14 est configuré pour recevoir ledit premier signal électrique représentatif de ladite pression mesurée, ledit premier signal électrique, étant fourni par un transducteur de pression T_{P1} externe audit dispositif électronique 10, ledit premier transducteur de pression T_{P1} étant propre à transformer la pression mesurée, au sein dudit étrier E, en ledit premier signal électrique P_{E}, et pour fournir ledit premier signal électrique P_{E} en entrée dudit régulateur électronique 12.

Le dispositif électronique 10 comprend en outre un espace mémoire reconfigurable P_{D}. Un tel espace mémoire reconfigurable P_{D} est configuré pour stocker ledit signal électrique représentatif de la valeur de pression nécessaire au freinage d'urgence dudit matériel roulant ferroviaire, et configuré pour fournir ledit signal électrique représentatif de la valeur de pression nécessaire au freinage d'urgence en entrée dudit régulateur électronique 12, en présence d'une requête F_{U} de freinage d'urgence.

Selon le mode de réalisation simplifié de la figure 1, le dispositif électronique 10 comprend en outre au moins un deuxième module d'acquisition 16 configuré pour recevoir ledit signal électrique à partir d'une entrée 15 fournie par une électronique de commande externe audit dispositif électronique 10 ou fourni par un système de contrôle et de surveillance de train, et fournir ledit signal électrique en entrée dudit régulateur électronique 12, en absence d'une requête de freinage d'urgence.

Autrement dit, le régulateur électronique de pression 12 contrôle les deux électrovalves EV₁ et EV₂. Si la pression dans le cylindre de l'étrier de frein est trop faible, le régulateur électronique 12 de pression transmet une commande électrique C₄ par exemple un bit de valeur zéro (ou inversement de valeur un) à l'électrovalve supérieure EV₁, afin d'admettre de l'air issu d'une source de pression (typiquement un réservoir de frein R_{F} suivi par un réducteur de pression R_{P} tel qu'illustré par la figure 1).

A l'inverse, lorsque la pression est trop élevée dans le cylindre de l'étrier de frein, le régulateur électronique 12 de pression transmet une commande C₂ par exemple un bit de valeur un (ou inversement de valeur zéro) à l'électrovalve supérieure EV₂, afin d'évacuer la pression dans l'atmosphère A.

Pour ce faire, le régulateur électronique 12 de pression compare en permanence la pression de référence avec la pression réelle du cylindre de l'étrier de frein, la pression réelle étant mesurée via le transducteur de pression T_{P1} externe audit dispositif électronique 10. Le transducteur de pression T_{P1} externe est propre à fournir le premier signal électrique P_{E} représentatif de ladite pression mesurée au sein dudit étrier E au premier module électronique d'acquisition 14 du dispositif 10 de régulation.

Par défaut, la pression de référence stockée au sein de l'espace mémoire reconfigurable P_{D} est celle nécessaire au freinage d'urgence afin d'assurer la sécurité du système. Si le freinage d'urgence n'est pas requis, alors la pression de référence correspond à un signal électrique RFs obtenu à partir d'au moins une entrée de freinage de service, via ledit deuxième module d'acquisition 16 dudit dispositif 10 fournie(s) par au moins une unité électronique de commande externe audit dispositif électronique 10 et/ou fournie(s) par un système de contrôle et de surveillance de train TCMS (de l'anglais *Train Control and Monitoring Systems).*

Autrement dit, la requête de freinage d'urgence joue le rôle d'interrupteur (i.e. commutateur) pour imposer la pression de référence stockée au sein de l'espace mémoire reconfigurable P_{D} lorsque le freinage d'urgence est requis.

Il est à noter que l'architecture du dispositif 10 selon la présente invention est innovante dans la mesure ou toutes les fonctions mises en œuvre au sein du dispositif 10 via les éléments 12, 14, 16 et P_{D} sont mises en œuvre électroniquement et non au moyen d'un circuit pneumatique tel qu'effectué classiquement, et ce y compris pour la gestion du freinage d'urgence, et avantageusement en utilisant une seule paire d'électrovalves. Ainsi, la présente invention permet de réduire le nombre de composants pneumatiques, le coût, la masse, le volume nécessaire à la régulation de pression tout en permettant par ailleurs une meilleure intégration.

Selon une variante de réalisation, non représentée, le dispositif électronique 10 de régulation de la pression est et/ou comprend une carte électronique sécurisée et comprend une unité de traitement d'informations formée par exemple d'une mémoire comprenant notamment l'espace mémoire reconfigurable P_{D}, et d'un processeur associé à la mémoire.

Selon cette variante de réalisation, le régulateur électronique 12 de pression, le premier module d'acquisition 14, le deuxième module d'acquisition 16, sont réalisés chacun sous forme d'un composant logique programmable, tel qu'un FPGA (de l'anglais *Field Programmable Gate Array*) un FPGA n'étant pas considéré comme un logiciel mais comme un matériel, ou sous forme d'un circuit intégré, tel qu'un ASIC (de l'anglais *Application Specific Integrated Circuit).*

Selon une autre variante de réalisation, pour atteindre le niveau de sécurité requis au freinage d'urgence, un dédoublement des fonctions critiques est nécessaire et par exemple mis en œuvre en utilisant un processeur (intégrant du logiciel, le régulateur électronique 12 de pression, le premier module d'acquisition 14, le deuxième module d'acquisition 16, étant alors réalisés chacun sous forme d'un logiciel) redondé par un FPGA tel que décrit ci-dessus.

Avantageusement, de par sa nature entièrement électronique, le dispositif électronique 10 de régulation de la pression est paramétrable en usine, notamment afin de le reconfigurer (i.e. de l'adapter) à chaque application spécifique du matériel roulant considéré dans lequel il est propre à être embarqué.

Il est à noter que selon une première variante du mode de réalisation simplifié de la figure 1, les deux électrovannes pour l'admission et l'échappement (i.e. le relâchement) de l'air sont réalisées par un seul composant avec deux entrées électriques : une pour la commande C₁ de l'admission et une pour la commande C₂ de l'échappement. Cette variante présente ainsi une paire d'électrovannes (i.e. électrovalves) plus compacte ce qui permet une meilleure intégration.

Selon une deuxième variante optionnelle du mode de réalisation simplifié de la figure 1, le système de régulation de la pression fournie à un étrier E comprend en outre une valve relais présentant par exemple un taux de régulation 1 :1 (i.e. rapport 1 :1 indiquant que la pression de sortie est égale à la pression pilote reçue en entrée de la part de la paire d'électrovalves EV₁ et EV₂ tout en fournissant en sortie un débit plus élevé que celui reçu en entrée, le débit en sortie étant limité uniquement par les caractéristiques du circuit en aval, à titre d'alternative la pression de sortie n'est pas forcément égale mais proportionnelle à la pression pilote reçue en entrée). Ladite valve relais est localisée entre la paire d'électrovalves EV₁ et EV₂ et l'étrier E de frein à cylindre pneumatique, la paire d'électrovalves EV₁ et EV₂ étant configurée pour générer une pression pilote à destination de ladite valve relais elle-même configurée pour amplifier ensuite le débit en sortie (i.e. via la génération d'un débit d'air plus élevé) selon une amplification prédéterminée à destination de l'étrier E de frein à cylindre pneumatique. Autrement dit, la valve relais est elle-même configurée pour remplir le cylindre pneumatique de l'étrier E à une pression égale à la pression pilote et ce avec un débit plus élevé que celui fournit en entrée par la paire d'électrovalves EV₁ et EV₂. La valve relais est donc une source de pression qui impose une pression au circuit et permet ainsi de diminuer le débit d'air dans la paire d'électrovalves EV₁ et EV₂ en amont. La taille, le coût et la consommation électrique des électrovalves EV₁ et EV₂ sont avantageusement réduits.

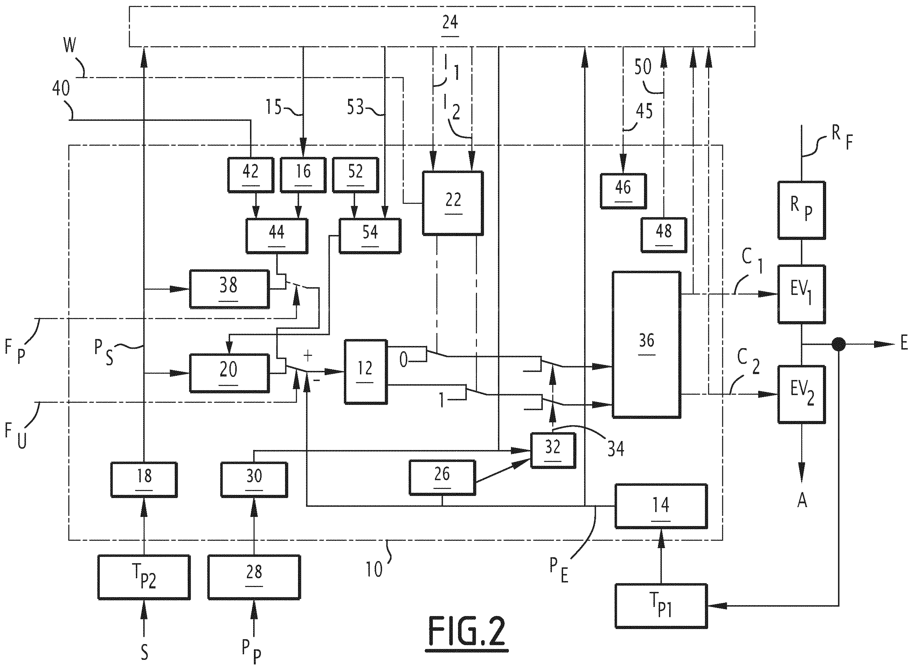

La figure 2 est une représentation schématique d'un dispositif électronique de régulation de la pression selon différentes variantes de la présente l'invention, les différentes variantes étant représentées de manière cumulative sur le mode de réalisation de la figure 2. A titre d'alternative, chaque variante décrite ci-après peut être ajoutée de manière optionnelle indépendante au mode de réalisation simplifié de la figure 1 décrit précédemment.

Selon une première variante optionnelle, le dispositif électronique 10 de régulation comprend en outre un troisième module d'acquisition 18 configuré pour recevoir un troisième signal électrique P_{S} représentatif de la pression mesurée au sein d'une suspension S associée audit étrier de frein E, ledit troisième signal électrique étant fourni par un deuxième transducteur T_{P2} de pression externe audit dispositif électronique 10. Ledit deuxième transducteur de pression T_{P2} est propre à transformer la pression mesurée, au sein de ladite suspension S, en ledit troisième signal électrique, et fournir ce troisième signal électrique en entrée d'au moins un module 20 de compensation de charge.

De plus, selon cette première variante décrite en relation avec la figure 2, le dispositif électronique 10 de régulation comprend en outre ledit au moins un module 20 de compensation de charge configuré pour déterminer la valeur de pression nécessaire à un freinage d'urgence dudit matériel roulant ferroviaire en fonction de la charge dudit matériel roulant ferroviaire dont le troisième signal électrique est représentatif.

Autrement dit, selon cette première variante, la référence de pression par défaut utilisée en cas de freinage d'urgence est compensée par la charge (i.e. la référence de pression est une fonction linéaire de la charge, les paramètres de la fonction linéaire étant également stockés en mémoire et paramétrables selon l'application), et non constante et stockée dans un espace mémoire comme illustré sur la figure 1. En pratique, la pression à l'intérieur du soufflet de suspension S, cette pression étant une image de la charge du matériel roulant ferroviaire (i.e. train), est mesurée avec le transducteur de pression T_{P2}. Le signal de sortie du transducteur de pression T_{P2} est ensuite acquis par le troisième module d'acquisition 18 de la carte électronique sécurisée du dispositif 10 de régulation et utilisé comme entrée pour une fonction de compensation de charge mis en œuvre par le module de compensation de charge 20, qui définit la référence de pression en cas de freinage d'urgence.

Il est néanmoins à noter que des mesures aberrantes de pression dans la suspension S (trop haute ou trop basse, par exemple parce que le transducteur de pression T_{P2} est défaillant ou parce que le coussin de suspension est crevé) sont ignorées (i.e. la fonction linéaire est alors écrêtée).

Une telle compensation de la charge dans le freinage d'urgence permet avantageusement d'obtenir toujours la même décélération, et donc la même distance de freinage, quelle que soit la charge du matériel roulant ferroviaire (i.e. train), comme exigé notamment sur certains marchés.

Selon une deuxième variante optionnelle, cumulable avec la variante précédente ou uniquement cumulable avec le mode de réalisation simplifié de la figure 1, le dispositif électronique 10 de régulation comprend en outre un module 22 de régulation forcée, configuré pour acquérir au moins deux types d'ordres distincts I₁ et I₂, permettant de :
- forcer l'électrovalve d'admission EV₁ à l'état fermé I₁, et/ou
- forcer l'électrovalve d'échappement EV₂ à l'état ouvert I₂, lesdits au moins deux ordres étant émis par une unité 24 électronique de contrôle de frein externe audit dispositif électronique 10, ladite unité 24 électronique de contrôle de frein étant propre à détecter un glissement des roues dudit matériel roulant ferroviaire, et à contrôler ledit glissement au moyen desdits ordres de forçages des électrovalves EV₁ et EV₂, en par exemple propre:
   - en présence dudit glissement, à émettre ledit ordre I₁ et I₂ de forcer la décroissance de l'effort de frein,
   - une fois ledit glissement stabilisé, à émettre ledit ordre de bloquer l'effort de frein à sa valeur courante (I₁ et non I₂),
   - en absence dudit glissement, à émettre ledit ordre (non I₁ et non I₂) de forcer la croissance de l'effort de frein jusqu'à la valeur correspondant à la pression de référence du régulateur 12.

Le module 22 de régulation forcée est en outre configuré pour transformer ledit ordre acquis en une commande de régulation forcée prioritaire par rapport à la commande électronique fournie en sortie par le régulateur électronique de pression 12 et à destination de ladite paire d'électrovalves EV₁ et EV₂.

A titre d'alternative non représentée, le module 22 de régulation forcée est en outre configuré pour transformer ledit ordre acquis en une commande de régulation forcée fournie en entrée du régulateur électronique de pression 12. Autrement dit, selon cette variante non représentée sur la figure 2, il est possible aussi de faire agir les sorties du module 22 directement sur la pression de référence (en entrée du module 12) et non sur la sortie du module 12.

Autrement dit, selon cette deuxième variante optionnelle, la carte électronique sécurisée dispositif électronique 10 de régulation dispose de deux entrées supplémentaires, à savoir les ordres distincts I₁ et I₂ d'empêcher l'admission, ou de forcer l'échappement.

Ces entrées I₁ et I₂ sont utilisées, typiquement, au cours de la mise en oeuvre d'un algorithme de protection contre le glissement des roues WSP (de l'anglais *Wheel Slide Protection)* par l'unité électronique 24 de contrôle de frein (également appelée ensemble d'équipement électroniques de contrôle des freins (BCE)) externe afin de forcer le relâchement du frein (i.e. l'échappement de l'air) lorsqu'un glissement est détecté, ce qui contourne (supplante en étant prioritaire sur) la sortie du régulateur de pression 12 tel qu'illustré par la figure 2 où les sortie du module de régulation forcée 22 sont propres à modifier en aval les sortie du régulateur de pression 12.

Lorsque le glissement a disparu, l'algorithme de protection contre le glissement des roues WSP laisse alors le régulateur 12 rétablir rapidement la pression de freinage dans le cylindre de l'étrier de frein E.

Afin de garantir la sécurité, l'ordre de forcer l'électrovalve d'admission EV₁ à l'état fermé est ignoré s'il dure par exemple plus de quinze secondes en conformité à l'exigence standard de la norme EN15595, cette durée étant paramétrable notamment selon un autre exemple au moyen d'une valeur de durée seuil bien inférieure à quinze secondes, et un "défaut de chien de garde" W (de l'anglais *watchdog fault)* est généré et transmis par la carte électronique de sécurité du dispositif électronique 10, pour être utilisé, par exemple, par le système de contrôle et de surveillance de train TCMS (de l'anglais *Train Control and Monitoring System).* Optionnellement, il en va de même si l'ordre de forcer l'électrovalve d'échappement EV₂ à l'état ouvert dure plus de dix secondes. De plus, si un ordre de forçage de l'électrovalve d'échappement EV₂ à l'état ouvert (I₂) est reçu sans ordre de forçage de l'électrovalve d'admission EV₁ à l'état fermé (I₂ et non I₁), ce qui risquerait de vider le réservoir de frein à l'atmosphère, alors ces ordres seront ignorés.

Une telle deuxième variante optionnelle permet de supprimer l'électrovanne classiquement appelée « soupape (i.e. vanne) de décharge » (en anglais « dump valve ») utilisée traditionnellement pour la protection contre le glissement des roues WSP.

Selon une troisième variante optionnelle complémentaire de la variante précédente, le dispositif de régulation 10 comprend en outre un module à hystérésis 26 configuré pour :
- comparer la valeur du premier signal électrique à un seuil prédéterminé représentatif d'une limite avant surpression au sein dudit étrier, et
- en cas de dépassement dudit seuil, générer un ordre de relâchement de pression, prioritaire sur la commande de régulation forcée, et à destination de ladite paire d'électrovalves.

Autrement dit, selon cette troisième variante, une fonction électronique supplémentaire est implémentée dans la carte électronique de sécurité du dispositif de régulation 10. Cette fonction électronique mise en œuvre via le module à hystérésis 26 forcera l'échappement de l'air si la pression mesurée dépasse un seuil donné avec une hystérésis prédéterminée. Une telle troisième variante optionnelle permet de protéger l'étrier E contre une surpression dans le cylindre de frein, qui pourrait l'endommager. Cette fonction apporte une sécurité supplémentaire, et peut également remplacer le réducteur de pression R_{P} qui est habituellement monté après le réservoir de frein R_{F}.

Une quatrième variante optionnelle complémentaire est proposée notamment pour les matériels roulants ferroviaires dont certains des étriers de frein sont appelés "étriers de frein de stationnement", car ils intègrent des caractéristiques supplémentaires pour maintenir le matériel roulant ferroviaire à l'arrêt même lorsqu'il n'y a plus de pression disponible sur le matériel roulant ferroviaire, c'est-à-dire lorsque le matériel roulant ferroviaire est stationné pour une longue durée, par exemple de plusieurs heures.

En général, environ la moitié des étriers de frein sont des étriers de frein de stationnement (également appelé frein de parking). Les étriers de frein normaux n'ont qu'un seul cylindre de frein, de type direct, avec un effort proportionnel à la pression. Les étriers de frein de stationnement ont deux cylindres de frein, un direct (comme les étriers de frein normaux), et un indirect avec l'effort inversement proportionnel à la pression, grâce à un ressort supplémentaire.

Lorsque le matériel roulant ferroviaire est stationné pour une longue durée, tous les circuits pneumatiques sont à la pression atmosphérique, et l'effort est assuré par le ressort, ce qui évite tout mouvement du matériel roulant ferroviaire (i.e. train). Pendant la marche du matériel roulant ferroviaire (e.g. du train), le cylindre indirect est mis sous pression afin d'annuler l'effort du ressort, et le frein est commandé uniquement par le cylindre direct, comme pour les étriers de frein normaux. Avec cette solution, il y a un risque que les deux cylindres génèrent un effort en même temps, ce qui pourrait endommager l'étrier E. Pour éviter cela, une valve « anti-compound » (i.e. anti-superposition) est classiquement ajoutée et propre à empêcher d'appliquer une pression dans le cylindre direct lorsqu'il n'y a pas de pression dans le cylindre indirect.

La quatrième variante optionnelle complémentaire ici proposée vise à permettre la suppression de la valve « anti-compound » en la remplaçant par une fonction supplémentaire dans la carte électronique de sécurité. Pour ce faire, le dispositif de régulation 10 comprend en outre, connecté à un commutateur 28 externe de pression (i.e. pressostat 28), un quatrième module d'acquisition 30 configuré pour :
- recevoir un signal, émis par le commutateur externe 28, représentatif de l'absence de pression dans un cylindre indirect lorsque l'étrier de frein est un étrier de frein de stationnement comprenant deux cylindres de frein : un cylindre direct dédié au freinage hors stationnement et un cylindre indirect dédié au freinage de stationnement du matériel roulant ferroviaire ;
- générer un ordre de relâchement de pression, prioritaire sur la commande de régulation forcée, et à destination de ladite paire d'électrovalves.

Autrement dit, grâce au pressostat 28 indiquant l'absence de pression dans le cylindre indirect, la carte électronique de sécurité du dispositif de régulation 10 va forcer l'échappement d'air dans le cylindre direct pour éviter la superposition des efforts.

A titre d'alternative, non représentée, le pressostat 28 du système illustré par la figure 2 est remplacé par un autre transducteur de pression.

Tel qu'illustré sur la figure 2, selon un aspect particulier la carte électronique de sécurité du dispositif de régulation 10 comprend en outre un module 32 correspondant à un OU logique pour générer un ordre 34 de relâchement, prioritaire sur la commande de régulation forcée, émis par le module à hystérésis 26 ou par le quatrième module d'acquisition 30.

A titre d'alternative à la quatrième variante optionnelle complémentaire précitée, selon une cinquième variante optionnelle complémentaire, non représentée, la commande électronique émise par défaut à destination de ladite paire d'électrovalves est une commande d'admission de pression, lorsque l'étrier de frein comprend un cylindre direct dédié au freinage de service et au freinage d'urgence, ou une commande de relâchement de pression, lorsque l'étrier de frein est un étrier de frein de stationnement comprenant uniquement un cylindre indirect dédié à la fois au freinage de service, au freinage d'urgence et/ou au frein de parking.

Cette cinquième variante du dispositif électronique 10 permet une simplification supplémentaire de l'étrier de frein de stationnement en y supprimant le cylindre direct de l'étrier de frein de stationnement, le cylindre de frein indirect étant alors utilisé aussi bien pour le frein de service que pour le frein d'urgence.

Selon cette cinquième variante, le fonctionnement précité du dispositif de régulation 10 reste le même hormis le fait qu'il impose que l'état par défaut des électrovannes EV₁ et EV₂ doit être l'échappement à l'atmosphère, et un inversement des valeurs binaires logiques (zéro et un) des commandes C₁ et C₂, avec notamment la valeur un pour l'admission d'air et la valeur zéro pour l'échappement, afin que le résultat de la commande électronique émise par défaut résulte en une application d'effort par l'étrier.

Cette cinquième variante permet également la suppression de la valve « anti-compound » et de réduire le coût de l'étrier de frein de stationnement qui ne comprend alors qu'un seul étrier de frein.

Selon une sixième variante optionnelle complémentaire, le dispositif de régulation 10 comprend en outre un module 36 de minuterie configuré pour établir une durée minimale de transition entre deux états distincts de la paire d'électrovalves, lesdits deux états distincts étant associés à l'application de deux commandes électroniques distinctes.

Autrement dit, selon cette sixième variante optionnelle complémentaire, une fonction électronique supplémentaire est ajoutée dans la carte électronique de sécurité du dispositif de régulation 10 pour s'assurer que les électrovannes EV₁ et EV₂ ne sont pas activées et désactivées trop rapidement, notamment via la vérification d'un temps minimum d'activation et d'un temps minimum de désactivation. Cette sixième variante optionnelle complémentaire permet également de s'assurer qu'un temps minimum de transition est assuré entre l'admission et l'évacuation de l'air, et vice-versa.

Plus précisément le module 36 utilise par exemple au moins trois paramètres :
- t_off_min correspondant à la durée minimale pendant laquelle l'électrovanne reste fermée (i.e. la commande de l'électrovanne doit rester à zéro pendant au moins t_off_min) ;
- t_on_min correspondant à la durée minimale pendant laquelle l'électrovanne reste ouverte (i.e. la commande de l'électrovanne doit rester à un pendant au moins t_on_min)
- t_dead correspondant à la durée minimale entre la fermeture de EV1 (respectivement EV2) et l'ouverture de EV2 (respectivement EV1) => on ne peut jamais ouvrir les deux électrovannes simultanément, donc on passe par un temps minimal (t_dead) pendant lequel les deux électrovannes sont fermées.

Cette sixième variante optionnelle complémentaire permet ainsi d'optimiser la durée de vie des électrovannes EV₁ et EV₂, ainsi que de réduire le besoin de maintenance.

Selon une septième variante optionnelle complémentaire, le dispositif de régulation 10 comprend en outre une entrée de freinage d'urgence dupliquée et un deuxième module 38 de compensation de charge associée à ladite entrée de freinage d'urgence dupliquée. Un telle septième variante optionnelle complémentaire est propre à être utilisée sur certains marchés (trains à grandes vitesses par exemple) demandant deux niveaux d'effort car l'adhérence varie avec la vitesse (on freine moins fort à haute vitesse), d'où la duplication des entrées « freinage d'urgence » : on appliquera d'abord la première, puis la seconde une fois la vitesse descendue en dessous d'un certain seuil).

Comme pour le module 20 de compensation de la charge, si la pression dans la suspension (mesurée par TP₂) est en dehors de la plage prévue par la conception, alors on applique des pressions par défaut, mais qui peuvent être différentes pour les modules 20 et 38. Cela peut se produire par exemple en cas de capteur TP₂ défaillant, ou si le coussin de suspension est crevé. Autrement dit, la fonction linéaire de compensation de pression à la charge est écrêtée dans ses parties hautes et basses, pour se prémunir contre une mesure de pression de suspension aberrante.

Une telle septième variante optionnelle complémentaire est également propre à être utilisée pour obtenir une fonction de freinage d'immobilisation F_{P} (i.e. de maintien en sécurité de l'anglais *holding brake)* utilisé pour maintenir le matériel roulant ferroviaire (e.g. le train) à l'arrêt pendant une courte durée, généralement dans les gares. Habituellement, le frein d'immobilisation est obtenu en appliquant le frein de service et en coupant la traction (pour des raisons de sécurité). Grâce à la sécurité assurée par le contrôle de la carte électronique de sécurité 10, le niveau d'intégrité de la sécurité de la coupure de la traction peut être réduit.

Selon une huitième variante optionnelle complémentaire, l'entrée et l'acquisition du signal pour la référence de pression du frein de service sont dupliquées et représentées par l'entrée 40 et le module d'acquisition 42. La deuxième entrée 40 correspond par exemple référence de pression frein de service de secours fournie par un autre ensemble d'équipement électroniques de contrôle des freins (BCE) ou fournie par la pression de la conduite générale (selon définition de la EN 14478, en anglais « brake pipe »). Une telle entrée 40 est propre à être utilisée selon cette variante, par exemple, en cas de défaillance de l'électronique de commande 24 qui génère l'entrée 15, pour augmenter la disponibilité globale du système, ce qui est notamment requis actuellement sur les marchés ferroviaires indiens.

L'entrée 40 peut également être utilisée pour émuler (i.e. remplacer) le distributeur de frein traditionnel, en ajoutant un transducteur de pression mesurant la pression de la conduite générale équipant les trains classiques, respectant par exemple les normes UIC ou AAR pour le freinage, répartie tout au long du train. La pression dans la conduite générale est inversement proportionnelle à l'effort de freinage demandé par le conducteur. Le rôle du distributeur est de générer la pression pour le cylindre de l'étrier de frein à partir de la pression de la conduite générale. Les distributeurs sont généralement des composants lourds et coûteux. Cette huitième variante optionnelle complémentaire permet alors de remplacer le distributeur par un simple transducteur de pression, connecté à la carte électronique sécurisée.

Il est à noter que la carte électronique de sécurité 10 vise à donner priorité au freinage d'urgence sur le reste, (i.e. F_{U} a priorité sur F_{P} qui a lui-même priorité sur les entrées 15 et 40 précitées), et pour ce faire comprend également un comparateur 44 configuré pour déterminer l'entrée de valeur maximale parmi les entrées 15 et 40, la sortie du comparateur 44 étant ensuite reliée à deux commutateurs reliés respectivement aux sorties des modules de compensation de charge 20 et/ou 38 afin d'utiliser F_{U} en priorité lorsqu'un freinage d'urgence est requis, puis par ordre de priorité le freinage d'immobilisation F_{P} (en absence de freinage d'urgence requis) puis l'entrée de valeur maximale parmi les entrées 15 et 40 (en absence de freinage d'urgence F_{U} ou de freinage d'immobilisation F_{P}) pour définir la pression de référence à utiliser.

A titre d'alternative non représentée, le comparateur 44 est localisé après lesdits (i.e. en aval desdits) deux commutateurs. L'effet étant similaire à la localisation en amont représentée par la figure 2, puisque l'effort en frein d'urgence est supérieur à l'effort en frein de service.

Selon une neuvième variante optionnelle complémentaire, le dispositif 10 de régulation comprend en outre un module 46 d'autotest configuré pour lancer automatiquement un autotest dudit dispositif, et/ou un autotest de la paire d'électrovalves EV₁ et EV₂, et/ou dudit étrier de frein E. Autrement dit, selon cette neuvième variante optionnelle complémentaire, une fonction électronique supplémentaire est ajoutée sur la carte électronique de sécurité pour réaliser un autotest de la carte, des électrovannes EV₁ et EV₂ et de l'étrier de frein E. Ceci augmente encore le niveau d'intégrité de sécurité de la carte électronique 10 constituant le dispositif de régulation. L'autotest est lancé automatiquement à chaque mise sous tension de la carte électronique de sécurité 10 ou peut être lancé par une électronique de contrôle externe 24 tel qu'illustré par l'ordre 45 sur la figure 2.

Selon une dixième variante optionnelle complémentaire, le dispositif électronique 10 de régulation comprend en outre un module 48 de surveillance de défaut configuré pour au moins surveiller la propre alimentation interne en puissance dudit dispositif, et effectuer une remontée 50 de ce résultat de surveillance à une électronique de contrôle externe 24 pour être consolidée avec les autres informations sur l'état sanitaire du système de freinage du matériel roulant ferroviaire (i.e. train).

Autrement dit, selon cette dixième variante optionnelle complémentaire, la carte électronique sécurisée 10 comprend une fonction supplémentaire de surveillance des défauts, comme par exemple la surveillance de son alimentation interne. Cette fonction aide à diagnostiquer les problèmes pendant les essais et/ou pendant le service commercial (i.e. opération avec des passagers)

Selon une onzième variante optionnelle complémentaire, le dispositif électronique 10 de régulation comprend en outre un accéléromètre 52 configuré pour mesurer l'accélération longitudinale dudit matériel roulant ferroviaire, et un module de combinaison 54 configuré pour combiner ladite accélération longitudinale à une vitesse dudit matériel roulant ferroviaire fournie par l'unité 24 électronique de contrôle de frein externe audit dispositif électronique 10 et générer une vitesse consolidée propre à être utilisée au moins par ledit module de compensation de charge 20.

Autrement dit, selon cette onzième variante optionnelle complémentaire, l'accéléromètre 52 est optionnellement ajouté sur la carte électronique de sécurité 10. L'intégration de l'accélération longitudinale délivrée par l'accéléromètre, combinée à la vitesse 53 fournie par l'électronique de contrôle des freins BCE 24 (ou directement à partir d'un transducteur de vitesse non représenté), est utilisée pour générer, via le module de combinaison 54 une référence de vitesse fiable. Cette référence de vitesse fiable est ensuite utilisée par le module de compensation de charge 20 pour adapter la référence de pression dans le frein d'urgence en fonction de la vitesse. Une référence de pression de freinage variable est avantageusement propre à être utilisée pour obtenir un effort de freinage variable dans le frein d'urgence afin de faire face au coefficient d'adhérence roue-rail, qui change avec la vitesse, comme l'exige les spécifications techniques pour l'interopérabilité TSI (de l'anglais *Technical Specifications for Interoperability).* Une telle référence de pression de freinage variable peut également être utilisée pour compenser le coefficient de frottement, par exemple entre le disque et la plaquette de frein, qui dépend également de la vitesse.

Selon une douzième variante optionnelle complémentaire, la carte électronique sécurisée constituant le dispositif électronique de régulation 10 renvoie à une autre électronique de commande, par exemple à l'électronique de commande de frein BCE 24 des données telles que listées ci-dessous à titre d'exemple non limitatif :
- la pression mesurée dans le cylindre de l'étrier E de frein.
- la commande des électrovannes EV₁ et EV₂,
- la pression dans le soufflet de suspension S notamment lorsque la première variante optionnelle de la figure 2 est mise en oeuvre ;
- l'état de l'étrier de frein de stationnement (également appelé frein de parking) si la quatrième variante optionnelle complémentaire est utilisée, ou la pression dans le cylindre indirect de l'étrier de frein de stationnement si le pressostat 28 du système selon cette variante est remplacé par un transducteur de pression ;
- les accélérations dans les trois directions x, y, z d'un repère prédéterminé notamment lorsque la onzième variante optionnelle complémentaire est utilisée ;
- diverses données de surveillance si la dixième variante optionnelle complémentaire est utilisée.

De telles remontées mise en œuvre par le dispositif électronique de régulation 10 permettent de développer tout type de fonctions plus complexes dans l'électronique de commande telles que la protection contre le patinage en traction (de l'anglais *slip),* ou en freinage contre l'enrayage ou le glissement (de l'anglais *slide*) des roues, notamment selon la norme EN14478, la compensation de la charge pour le frein de service, la maintenance conditionnelle, la maintenance prédictive, la conjugaison des freins, la compensation de la pente, etc. Autrement dit, de telles remontées permettent de développer tout type de fonction non liée à la sécurité, ou avec un niveau d'intégrité de sécurité inférieur, sans reconception/recertification de la carte électronique sécurisée du dispositif électronique 10.

A titre d'alternative, selon une telle douzième variante optionnelle complémentaire, l'échange de données, y compris la référence de pression pour le frein de service, entre la carte électronique de sécurité 10 et l'électronique de commande 24 se fait par réseau, par exemple un réseau CAN de l'anglais *Controller Area Network,* ce qui réduit le câblage.

Selon une treizième variante optionnelle complémentaire, ledit premier transducteur de pression TP₁ et/ou ledit deuxième transducteur de pression TP₂, et/ou le commutateur 28 externe de pression (i.e. pressostat 28) sont directement intégrés audit dispositif électronique en utilisant un tube pneumatique connecté directement entre ledit dispositif et respectivement ledit étrier E et/ou ladite suspension S.

Autrement dit, les transducteurs de pression décrits précédemment sont directement intégrés dans la carte électronique sécurisée 10. En d'autres termes, un tube pneumatique est connecté directement entre la carte électronique sécurisée 10 et la pression à mesurer. Ceci simplifie l'intégration mécanique du côté des composants, pour une complexité supplémentaire limitée sur la carte électronique sécurisée elle-même. Cela permet également de retirer les transducteurs de pression des zones fortement soumises aux perturbations électromagnétiques, ce qui facilite la démonstration de compatibilité électromagnétique CEM.

La carte électronique sécurisée 10 selon la présente invention permet de mettre en œuvre les redondances nécessaires pour garantir le niveau d'intégrité de sécurité requis pour le freinage d'urgence en associant notamment de manière redondante une carte électronique sécurisée 10 (i.e. un dispositif de régulation de pression selon la présente invention) à chaque étrier de frein ou groupe d'étriers de frein.

Selon un aspect non représenté il est à noter que la carte électronique sécurisée 10 (i.e. un dispositif de régulation de pression selon la présente invention) est conçue de telle sorte que toute défaillance, ou la plupart d'entre elles, telle qu'une défaillance de l'alimentation électrique, conduit systématiquement à l'admission d'air dans le cylindre de frein (ou à l'échappement s'il s'agit d'un cylindre de frein indirect comme dans la cinquième variante), commandée par exemple par un signal électronique de valeur binaire nulle (i.e. un bit de valeur zéro), et entraînant l'application d'un effort de freinage.

De plus, de manière sécuritaire, les cartes électroniques sécurisées 10 (i.e. un dispositif de régulation de pression selon la présente invention) associées à chaque étrier de frein ou groupe d'étriers de frein ne présentent pas de mode commun de défaillance (i.e. sont indépendantes), autrement dit le dispositif de régulation de pression est étudié de façon à ce qu'une défaillance dans un dispositif n'entraine pas de défaillance dans un autre dispositif.

L'un des modes communs classique, notamment pour le système de commande de freinage pneumatique est la commande de freinage d'urgence F_{U}. Pour l'éviter, lorsque la conduite de freinage d'urgence tombe à zéro (son mode de défaillance le plus probable), la carte électronique sécurisée 10 est configurée pour appliquer systématiquement le frein d'urgence.

Un autre mode commun classique est la conception de la carte elle-même. En effet, comme la conception de la carte électronique sécurisée est la même pour toutes les cartes, un défaut de conception peut entraîner la même défaillance sur toutes les cartes au même moment. Cet écueil est évité par des essais types et l'application de normes, comme effectué classiquement pour le système de contrôle des freins pneumatiques.

Pour garantir un niveau d'intégrité de sécurité SIL (de l'anglais *safety integrity level*) adéquat, le système de régulation selon la présente invention est conçu de sorte que pour les électrovannes EV₁ et EV₂, s'il n'y a pas de commande, c'est-à-dire une commande à zéro, ce qui se produit par exemple en cas de panne de l'alimentation électrique de la carte électronique sécurisée, l'électrovanne supérieure EV₁ sera ouverte par défaut, et l'électrovanne inférieure EV₂ sera fermée. En d'autres termes, le cylindre de frein (direct) sera mis en communication directe avec le réservoir, ce qui entraînera donc un freinage. Dans la cinquième variante, c'est l'inverse : le cylindre de frein (indirect) est mis à l'atmosphère, ce qui entraine également un freinage.

Il est à noter, qu'il est possible d'atteindre le niveau de sécurité le plus élevé (SIL4) au moyen de logiciels redondés et diversifiés ou d'un logiciel redondé par un FPGA, ce qui revient à un pilotage par logiciel mais à un contrôle du résultat via un autre dispositif (i.e. non logiciel).

Le régulateur de pression 12 est par ailleurs conçu de telle sorte qu'en cas de défaillance d'un composant, l'admission d'air sera la commande par défaut (respectivement l'échappement dans le cas de la cinquième variante).

Si la ligne du train "Frein d'urgence" F_{U} tombe à zéro, son cas de défaillance le plus probable, le régulateur de pression 12 est configuré pour réguler la référence de pression par défaut nécessaire au freinage d'urgence.

Le transducteur de pression T_{P1} délivre normalement un signal électrique présentant un courant compris entre 4 et 20mA. Un courant anormal (typiquement 0mA) est propre à être détecté par la carte électronique de sécurité 10, et être interprété comme une pression insuffisante, ce qui obligera l'électrovanne supérieure EV₁ à admettre plus d'air.

Le module optionnel de compensation de charge 20 (et par conséquent le module d'acquisition 18, l'accéléromètre 52 et le module de combinaison 54 qui lui fournissent des données d'entrée) est conçu de telle sorte qu'en cas de défaillance, une pression par défaut (correspondant à la pression maximale de freinage, par exemple) soit générée et utilisée comme référence par le régulateur de pression 12.

Le module optionnel de régulation forcée 22 permet de s'assurer que l'algorithme WSP ne peut pas empêcher l'admission ou forcer un échappement d'air (qui entraînerait une réduction de la force de freinage) pendant plus de 10s (comme l'exigent les normes). Le module optionnel de régulation forcée 22 est conçu de telle sorte qu'en cas de panne, la sortie du régulateur de pression 12 soit utilisée par défaut pour commander les électrovannes EV₁ et EV₂.

Les modes de défaillance des autres modules n'ayant pas d'impact direct sur la sécurité tel que le module 16 d'acquisition utilisé uniquement pour le freinage de service, qui n'est pas lié à la sécurité sont également analysés afin de s'assurer qu'elles ne peuvent pas affecter négativement les autres modules précités assurant la sécurité du matériel roulant ferroviaire.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention, qui est définie dans les revendications.

Ainsi, la présente invention propose une architecture électropneumatique pour la commande de frein, qui permet de remplacer la plupart des composants pneumatiques de la commande de frein par des composants électroniques équivalents, même pour la fonction de sécurité comme le freinage d'urgence. Dans l'invention, tous les composants pneumatiques sont utilisés à la fois pour le freinage de service et le freinage d'urgence, ce qui permet de se limiter à une paire d'électrovalves pour assurer la régulation de pression et le niveau d'intégrité de sécurité requis pour le freinage d'urgence est assuré par une carte électronique sécurisée constituant le dispositif électronique 10 de régulation proposée.

## Revendications

1. Dispositif électronique (10) de régulation de la pression fournie, à un étrier (E) de frein à cylindre pneumatique d'un matériel roulant ferroviaire, via une paire d'électrovalves comprenant une électrovalve supérieure (EV₁) d'augmentation de pression et une électrovalve inférieure (EV₂) de relâchement de pression, ledit dispositif électronique comportant un régulateur électronique de pression (12) configuré pour:
- contrôler ladite paire d'électrovalves via au moins une commande électronique en comparant en permanence un premier signal électrique représentatif de la pression mesurée au sein dudit étrier à un deuxième signal électrique représentatif d'une pression de référence, et
- commander l'ouverture de :
- l'électrovalve supérieure d'admission (EV₁) lorsque la valeur du premier signal électrique est inférieure à celle du deuxième signal électrique, ou
- l'électrovalve inférieure d'échappement (EV₂) lorsque la valeur du premier signal électrique est supérieure à celle deuxième signal électrique ;
ledit dispositif électronique (10) étant **caractérisé en ce que**:
en présence d'une requête de freinage d'urgence, ledit deuxième signal électrique représentatif d'une pression de référence correspondant à un signal électrique représentatif de la valeur de pression nécessaire au freinage d'urgence dudit matériel roulant ferroviaire, en absence d'une requête de freinage d'urgence, ledit deuxième signal électrique représentatif d'une pression de référence correspondant à un signal électrique obtenu à partir d'au moins une entrée de freinage de service dudit dispositif (10) fournie(s) par au moins une unité électronique de commande externe audit dispositif électronique (10) et/ou fournie(s) par un système de contrôle et de surveillance de train.

2. Dispositif électronique (10) selon la revendication 1, dans lequel ledit dispositif électronique comprend en outre :
- un premier module d'acquisition (14) configuré pour :
- recevoir ledit premier signal électrique représentatif de ladite pression mesurée, ledit premier signal électrique étant fourni par un premier transducteur de pression externe audit dispositif électronique (10), ledit premier transducteur de pression étant propre à transformer la pression mesurée, au sein dudit étrier, en ledit premier signal électrique,
et
- fournir ledit premier signal électrique en entrée dudit régulateur électronique (12),
- un espace mémoire reconfigurable (P_{D}) configuré pour :
- stocker ledit signal électrique représentatif de la valeur de pression nécessaire au freinage d'urgence dudit matériel roulant ferroviaire,
- fournir ledit signal électrique représentatif de la valeur de pression nécessaire au freinage d'urgence en entrée dudit régulateur électronique (12), en présence d'une requête de freinage d'urgence
- au moins un deuxième module d'acquisition (16, 42) configuré pour :
- recevoir et/ou générer ledit signal électrique obtenu à partir d'au moins une entrée de freinage de service dudit dispositif (10) fournie(s) par au moins une unité électronique de commande externe audit dispositif électronique (10) et/ou fournie(s) par un système de contrôle et de surveillance de train, et
- fournir ledit signal électrique obtenu en entrée dudit régulateur électronique (12), en absence d'une requête de freinage d'urgence.

3. Dispositif électronique (10) selon l'une quelconque des revendications 1 ou 2 comprenant en outre :
- un troisième module d'acquisition (18) configuré pour :
- recevoir un troisième signal électrique représentatif de la pression mesurée au sein d'une suspension (S) associée audit étrier de frein (E), ledit troisième signal électrique étant fourni par un deuxième transducteur de pression externe audit dispositif électronique (10), ledit deuxième transducteur de pression étant propre à transformer la pression mesurée, au sein de ladite suspension (S), en ledit troisième signal électrique, et
- fournir ledit troisième signal électrique en entrée d'au moins un module (20, 38) de compensation de charge,
- au moins un module (20, 38) de compensation de charge configuré pour déterminer la valeur de pression nécessaire à un freinage d'urgence, ou nécessaire à un freinage d'immobilisation dudit matériel roulant ferroviaire en fonction de la charge dudit matériel roulant ferroviaire dont le troisième signal électrique est représentatif.

4. Dispositif électronique (10) selon la revendication 2 ou la revendication 3 dans lequel ledit premier transducteur de pression et/ou ledit deuxième transducteur de pression sont directement intégrés audit dispositif électronique en utilisant un tube pneumatique connecté directement entre ledit dispositif et respectivement ledit étrier et/ou ladite suspension (S).

5. Dispositif électronique (10) selon l'une quelconque des revendications 2 à 4, comprenant en outre un module (22) de régulation forcée, configuré pour acquérir au moins deux types d'ordres distincts de :
- forcer l'électrovalve d'admission (EV₁) à l'état fermé, ou
- forcer l'électrovalve d'échappement (EV₂) à l'état ouvert,
lesdits au moins deux ordres étant émis par une unité (24) électronique de contrôle de frein externe audit dispositif électronique (10), ladite unité (24) électronique de contrôle de frein étant propre à détecter un glissement des roues dudit matériel roulant, et à contrôler ledit glissement au moyen desdits ordres de forçages des électrovalves (EV₁ et EV₂), ledit module (22) de régulation forcée étant en outre configuré pour transformer ledit ordre acquis en une commande de régulation forcée prioritaire par rapport à la commande électronique fournie en sortie par le régulateur électronique de pression (12) et à destination de ladite paire d'électrovalves.

6. Dispositif électronique (10) selon la revendication 5 comprenant en outre un module à hystérésis (26) configuré pour :
- comparer la valeur du premier signal électrique à un seuil prédéterminé représentatif d'une limite avant surpression au sein dudit étrier, et
- en cas de dépassement dudit seuil, générer un ordre de relâchement de pression, prioritaire sur la commande de régulation forcée, et à destination de ladite paire d'électrovalves.

7. Dispositif électronique (10) selon la revendication 5 ou 6 comprenant en outre un quatrième module d'acquisition (30) configuré pour :
- recevoir un signal représentatif de l'absence de pression dans un cylindre indirect lorsque l'étrier de frein est un étrier de frein de stationnement comprenant deux cylindres de frein : un cylindre direct dédié au freinage hors stationnement et un cylindre indirect dédié au freinage de stationnement du matériel roulant ferroviaire ;
- générer un ordre de relâchement de pression, prioritaire sur la commande de régulation forcée, et à destination de ladite paire d'électrovalves.

8. Système de régulation de la pression fournie à un étrier (E) de frein à cylindre pneumatique d'un matériel roulant ferroviaire, via une paire d'électrovalves comprenant une électrovalve supérieure (EV₁) d'augmentation et une électrovalve inférieure (EV₂) de relâchement de pression, le système comprenant au moins :
- un dispositif électronique (10) selon l'une quelconque des revendications précédentes ;
- ladite paire d'électrovalves.

9. Système électronique selon la revendication précédente comprenant en outre une valve relais présentant un taux de régulation 1 :1, ladite valve relais étant localisée entre la paire d'électrovalves et l'étrier de frein à cylindre pneumatique, la paire d'électrovalves étant configurée pour générer une pression pilote à destination de ladite valve relais elle-même configurée pour amplifier ensuite le débit en sortie, selon une amplification prédéterminée, à destination de l'étrier (E) de frein à cylindre pneumatique.

10. Matériel roulant ferroviaire comprenant un système selon l'une des revendications précédentes 8 et 9.

## Patentansprüche

1. **Elektronische** Vorrichtung (10) zum Regulieren des Drucks, welcher zu einem pneumatischen Bremsmittel (E) eines Schienenfahrzeugs geliefert wird, mittels eines Paars von Magnetventilen, welches ein oberes Magnetventil (EV₁) zum Erhöhen des Drucks und ein unteres Magnetventil (EV₂) zum Verringern des Drucks umfasst, wobei die elektronische Vorrichtung einen elektronischen Druckregulator (12) umfasst, welcher eingerichtet ist zum:
- Steuern des Paars von Magnetventilen mittels wenigstens einer elektronischen Anweisung, indem dauerhaft ein erstes elektrisches Signal, welches den Druck repräsentiert, welcher in dem Mittel gemessen wird, mit einem zweiten elektrischen Signal verglichen wird, welches einen Referenzdruck repräsentiert, und
- Anweisen des Öffnens:
∘ des oberen Einlass-Magnetventils (EV₁), wenn der Wert des ersten elektrischen Signals kleiner als derjenige des zweiten elektrischen Signals ist, oder
∘ des unteren Auslass-Magnetventils (EV₂), wenn der Wert des ersten elektrischen Signals größer als derjenige des zweiten elektrischen Signals ist;
wobei die elektronische Vorrichtung (10) **dadurch gekennzeichnet ist, dass**: bei einem Vorliegen einer Notbremsung-Anforderung das zweite elektrische Signal, welches einen Referenzdruck repräsentiert, einem elektrischen Signal entspricht, welches den Druckwert repräsentiert, welcher für die Notbremsung des Schienenfahrzeugs notwendig ist,
in Abwesenheit einer Notbremsung-Anforderung das zweite elektrische Signal, welches einen Referenzdruck repräsentiert, einem elektrischen Signal entspricht, welches ausgehend von wenigstens einem Betriebsbrems-Eingang der Vorrichtung (10) erhalten wird, welche/r durch wenigstens eine elektronische Steuereinheit geliefert wird/werden, welche extern zu der elektronischen Vorrichtung (10) ist und/oder durch ein Zugsteuer- und Überwachungssystem geliefert wird/werden.

2. **Elektronische** Vorrichtung (10) nach Anspruch 1, wobei die elektronische Vorrichtung ferner umfasst:
- ein erstes Aufnahmemodul (14), welches eingerichtet ist zum:
∘ Erhalten des ersten elektrischen Signals, welches den gemessenen Druck repräsentiert, wobei das erste elektrische Signal durch einen ersten Druckaufnehmer geliefert wird, welcher extern zu der elektronischen Vorrichtung (10) ist, wobei der erste Druckaufnehmer dazu geeignet ist, den gemessenen Druck in dem Mittel in das erste elektrische Signal umzuwandeln, und
∘ Liefern des ersten elektrischen Signals an den Eingang des elektronischen Regulators (12),
- einen rekonfigurierbaren Speicherbereich (P_{D}), welcher dazu eingerichtet ist:
∘ das elektrische Signal zu speichern, welches den Druckwert repräsentiert, welcher für die Notbremsung des Schienenfahrzeugs notwendig ist,
∘ das elektronische Signal, welches den für die Notbremsung notwendigen Druckwert repräsentiert, an den Eingang des elektronischen Regulators (12) bei Vorliegen einer Notbrems-Anforderung zu liefern,
- wenigstens ein zweites Aufnahmemodul (16, 42), welches dazu eingerichtet ist:
∘ das elektrische Signal, welches ausgehend von dem wenigstens einen Betriebsbrems-Eingang der Vorrichtung (10) erhalten wird, zu empfangen und/oder zu erzeugen, welches durch wenigstens eine elektronische Steuereinheit geliefert wird, welche extern zu der elektronischen Vorrichtung (10) ist und/oder durch ein Zugsteuer- und Überwachungssystem geliefert wird/werden, und
∘ das elektrische Signal, welches an dem Eingang des elektronischen Regulators (12) erhalten wird, in Abwesenheit einer Notbrems-Anforderung zu liefern.

3. Elektronische Vorrichtung (10) nach einem der Ansprüche 1 oder 2, ferner umfassend:
- **ein drittes** Aufnahmemodul (18), welches dazu eingerichtet ist:
∘ ein drittes elektrisches Signal zu empfangen, welches den gemessenen Druck innerhalb einer Aufhängung (S) repräsentiert, welche dem Bremsmittel (E) zugeordnet ist, wobei das dritte elektrische Signal durch einen zweiten Druckaufnehmer geliefert wird, welcher extern zu der elektronischen Vorrichtung (10) ist, wobei der zweite Druckaufnehmer dazu geeignet ist, den gemessenen Druck innerhalb der Aufhängung (S) in das dritte elektrische Signal umzuwandeln, und
∘ das dritte elektrische Signal zu einem Eingang von wenigstens einem Lastkompensationsmodul (20, 38) zu liefern,
- wenigstens ein Lastkompensationsmodul (20, 38), welches dazu eingerichtet ist, den Druckwert zu bestimmen, welcher für eine Notbremsung notwendig ist, oder für eine Feststellbremsung des Schienenfahrzeugs notwendig ist, als Funktion der Last des Schienenfahrzeugs, für welche das dritte elektrische Signal repräsentativ ist.

4. Elektronische Vorrichtung (10) nach Anspruch 2 oder Anspruch 3, wobei der erste Druckaufnehmer und/oder der zweite Druckaufnehmer direkt mit der elektronischen Vorrichtung integriert sind, indem eine pneumatische Leitung verwendet wird, welche direkt zwischen der Vorrichtung und entsprechend dem Mittel und/oder der Aufhängung (S) verbunden ist.

5. Elektronische Vorrichtung (10) nach einem der Ansprüche 2 bis 4, ferner umfassend ein Zwangsregulierungsmodul (22), welches dazu eingerichtet ist, wenigstens zwei Typen von unterschiedlichen Befehlen aufzunehmen, zum:
- Zwingen des Einlass-Magnetventils (EV₁) in den geschlossenen Zustand, oder
- Zwingen des Auslass-Magnetventils (EV₂) in den offenen Zustand,
wobei die wenigstens zwei Befehle von einer elektronischen Brems-Steuereinheit (24) ausgegeben werden, welche extern zu der elektronischen Vorrichtung (10) ist, wobei die elektronische Brems-Steuereinheit (24) dazu geeignet ist, einen Schlupf von Rädern des Fahrzeugs zu detektieren und den Schlupf mittels der Zwangsbefehle der Magnetventile (EV₁ und EV₂) zu steuern, wobei das Zwangsregulierungsmodul (22) ferner dazu eingerichtet ist, den aufgenommenen Befehl in eine Zwangsregulierungsanweisung umzuwandeln, welche bezüglich der elektronischen Anweisung priorisiert ist, welche am Ausgang durch den elektronischen Druckregulator (12) und mit dem Ziel des Paars von Magnetventilen geliefert wird.

6. Elektronische Vorrichtung (10) nach Anspruch 5, ferner umfassend ein Hysteresemodul (26), welches dazu eingerichtet ist:
- den Wert des ersten elektrischen Signals mit einem vorbestimmten Schwellenwert zu vergleichen, welcher eine Grenze vor einem Überdruck innerhalb des Mittels repräsentiert, und
- in einem Fall eines Überschreitens des Schwellenwerts, einen Befehl zum Ablassen des Drucks zu erzeugen, welcher zu der Zwangsregulierungsanweisung priorisiert ist, und mit dem Ziel des Paars von Magnetventilen.

7. Elektronische Vorrichtung (10) nach Anspruch 5 oder 6, ferner umfassend ein viertes Aufnahmemodul (30), welches dazu eingerichtet ist:
- ein Signal zu empfangen, welches die Abwesenheit eines Drucks in einem indirekten Zylinder repräsentiert, wenn das Bremsmittel ein Feststell-Bremsmittel ist, welches zwei Bremszylinder umfasst: einen direkten Zylinder, welcher einem Bremsen außerhalb des Feststellens gewidmet ist, und einen indirekten Bremszylinder, welcher dem Feststellbremsen des Schienenfahrzeugs gewidmet ist;
- Erzeugen eines Befehls zum Ablassen des Drucks, welcher zu der Zwangsregulierungsanweisung priorisiert wird, und mit dem Ziel des Paars von Magnetventilen.

8. System zum Regulieren des Drucks, welcher zu einem Bremsmittel (E) mit pneumatischem Zylinder eines Schienenfahrzeugs geliefert wird, mittels eines Paars von Magnetventilen, welche ein oberes Magnetventil (EV₁) zum Erhöhen und ein unteres Magnetventil (EV₂) zum Verringern des Drucks umfassen, das System wenigstens umfassend:
- eine elektronische Vorrichtung (10) nach einem der vorhergehenden Ansprüche;
- das Paar von Magnetventilen.

9. Elektronisches System nach dem vorhergehenden Anspruch, ferner umfassend ein Relaisventil, welches ein Regulierungsverhältnis von 1:1 aufweist, wobei das Relaisventil zwischen dem Paar von Magnetventilen und dem Bremsmittel mit pneumatischen Zylinder angeordnet ist, wobei das Paar von Magnetventilen dazu eingerichtet ist, einen Pilotdruck mit dem Ziel des Relaisventils zu erzeugen, welches selbst dazu eingerichtet ist, daraufhin den Ausgangsstrom gemäß einer vorbestimmten Verstärkung zu verstärken, mit dem Ziel des Bremsmittels (E) mit pneumatischem Zylinder.

10. Schienenfahrzeug, umfassend ein System nach einem der Ansprüche 8 und 9.

## Claims

1. Electronic device (10) for regulating the pressure supplied to a pneumatic cylinder brake calliper (E) of a railway rolling stock via a pair of solenoid valves comprising an upper solenoid valve (EV₁) for increasing pressure and a lower solenoid valve (EV₂) for relieving pressure, the said electronic device comprising an electronic pressure regulator (12) configured for:
- checking the said pair of solenoid valves via at least one electronic control by continuously comparing a first electrical signal representative of the pressure measured within the said calliper with a second electrical signal representative of a reference pressure, and
- controlling the opening of:
- the upper intake solenoid valve (EV₁) when the value of the first electrical signal is lower than that of the second electrical signal, or
- the lower exhaust solenoid valve (EV₂) when the value of the first electrical signal is greater than that of the second electrical signal;
the said electronic device (10) being **characterised in that**:
in the presence of an emergency braking request, the said second electrical signal representative of a reference pressure corresponding to an electrical signal representative of the pressure value needed for the emergency braking of the said rolling stock, in the absence of an emergency braking request, the said second electrical signal representative of a reference pressure corresponding to an electrical signal obtained from at least one service braking input of the said device (10) supplied by at least one electronic control unit external to the said electronic device (10) and/or supplied by a train control and monitoring system.

2. Electronic device (10) according to Claim 1, wherein the said electronic device further comprises:
- a first acquisition module (14) configured for:
- receiving the said first electrical signal representative of the said measured pressure, the said first electrical signal being supplied by a first pressure transducer external to the said electronic device (10), the said first pressure transducer being capable of transforming the pressure measured within the said calliper into the said first electrical signal, and
- supplying the said first electrical signal to the input of the said electronic regulator (12),
- a reconfigurable memory space (P_{D}) configured for:
- storing the said electrical signal representative of the pressure value needed for the emergency braking of the said railway rolling stock,
- supplying the said electrical signal representative of the pressure value needed for the emergency braking to the input of the said electronic regulator (12) in the presence of an emergency braking request,
- at least one second acquisition module (16, 42) configured for:
- receiving and/or generating the said electrical signal obtained from at least one service braking input of the said device (10) supplied by at least one electronic control unit external to the said electronic device (10) and/or supplied by a train control and monitoring system, and
- supplying the said electrical signal obtained to the input of the said electronic regulator (12) in the absence of an emergency braking request.

3. Electronic device (10) according to any one of Claims 1 or 2, further comprising:
- a third acquisition module (18) configured for:
- receiving a third electrical signal representative of the pressure measured within a suspension (S) associated with the said brake calliper (E), the said third electrical signal being supplied by a second pressure transducer external to the said electronic device (10), the said second pressure transducer being capable of transforming the pressure measured within the said suspension (S) into the said third electrical signal, and
- supplying the said third electrical signal to the input of at least one load compensation module (20, 38),
- at least one load compensation module (20, 38) configured for determining the pressure value needed for emergency braking, or needed for immobilisation braking of the said railway rolling stock, depending on the load of the said railway rolling stock of which the third electrical signal is representative.

4. Electronic device (10) according to Claim 2 or Claim 3, wherein the said first pressure transducer and/or the said second pressure transducer are integrated directly into the said electronic device using a pneumatic tube connected directly between the said device and respectively the said calliper and/or the said suspension (S).

5. Electronic device (10) according to any one of Claims 2 to 4, further comprising a forced regulation module (22) configured for acquiring at least two distinct types of commands for:
- forcing the intake solenoid valve (EV₁) into the closed state, or
- forcing the exhaust solenoid valve (EV₂) into the open state,
the said at least two commands being issued by an electronic brake control unit (24) external to the said electronic device (10), the said electronic brake control unit (24) being capable of detecting a sliding of the wheels of the said rolling stock, and of controlling the said sliding by means of the said forcing commands for the solenoid valves (EV₁ and EV₂), the said forced regulation module (22) being further configured for transform the said acquired command into a forced regulation command which has priority with respect to the electronic command supplied as output by the electronic pressure regulator (12) and is intended for the said pair of solenoid valves.

6. Electronic device (10) according to Claim 5, further comprising a hysteresis module (26) configured for:
- comparing the value of the first electrical signal with a predetermined threshold representative of a limit before overpressure within the said calliper, and
- if the said threshold is exceeded, generating a pressure relief command which has priority over the forced regulation command and is intended for the said pair of solenoid valves.

7. Electronic device (10) according to Claim 5 or 6, further comprising a fourth acquisition module (30) configured for:
- receiving a signal representative of the absence of pressure in an indirect cylinder when the brake calliper is a parking brake calliper comprising two brake cylinders: a direct cylinder dedicated to non-parking braking and an indirect cylinder dedicated to parking braking of the railway rolling stock;
- generating a pressure relief command, which has priority over the forced regulation command and is intended for the said pair of solenoid valves.

8. System for regulating the pressure supplied to a pneumatic cylinder brake calliper (E) of a railway rolling stock via a pair of solenoid valves comprising an upper solenoid valve (EV₁) for increasing pressure and a lower solenoid valve (EV₂) for relieving pressure, the system comprising at least:
- an electronic device (10) according to any one of the preceding claims;
- the said pair of solenoid valves.

9. Electronic system according to the preceding claim, further comprising a relay valve having a 1:1 regulation ratio, the said relay valve being located between the pair of solenoid valves and the pneumatic cylinder brake calliper, the pair of solenoid valves being configured for generating a pilot pressure intended for the said relay valve, which is in turn configured for then amplifying the output flow rate, according to a predetermined amplification, for the pneumatic cylinder brake calliper (E).

10. Railway rolling stock comprising a system according to one of the preceding Claims 8 and 9.
